(19) Europäisches Patentamt / European Patent Office / Office européen des brevets

(11) **EP 2 882 108 B1**

(12) **EUROPEAN PATENT SPECIFICATION**

(45) Date of publication and mention
of the grant of the patent:
**08.06.2016 Bulletin 2016/23**

(51) Int Cl.:
**H04B 3/32** *(2006.01)* **H02M 3/156** *(2006.01)*

(21) Application number: **13306670.4**

(22) Date of filing: **05.12.2013**

(54) **Power supply for transmission arrangement**

Stromversorgung für Getriebeanordnung

Alimentation électrique pour agencement de transmission

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.06.2015 Bulletin 2015/24**

(73) Proprietor: **ALCATEL LUCENT
92100 Boulogne-Billancourt (FR)**

(72) Inventor: **Vanderhaegen, Dirk
2018 Antwerpen (BE)**

(74) Representative: **ALU Antw Patent Attorneys
Intellectual Property and Standards
Copernicuslaan 50
2018 Antwerp (BE)**

(56) References cited:
**GB-A- 2 320 373    US-A1- 2006 094 960**

- **John Betten ET AL: "Reduce Power-Supply
Effects on ADSL Data Rates Reduce
Power-Supply Effects on ADSL Data Rates",
Communications Systems Design, 1 June 2002
(2002-06-01), pages 29-31, XP055116824,
Retrieved from the Internet:
URL:http://m.eet.com/media/1100840/june-fe
at3.pdf [retrieved on 2014-05-07]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field of the Invention**

The present invention relates to power supplies for use in transmission arrangements configured to transmit and/or receive cyclically extended data symbols, such as Discrete Multi-Tone (DMT) transceivers.

**Technical Background of the Invention**

considering the multiple DC voltage levels required by many electronic devices, designers need a way to convert standard power-source potentials into the voltages dictated by the load. Voltage conversion must be a versatile, efficient, reliable process. Switch-Mode Power Supplies (SMPS) are frequently used to provide the various levels of DC output power needed for modern applications, and are indispensable in achieving highly efficient, reliable DC-DC power-conversion.

A linear regulator provides the desired output voltage by dissipating excess power in ohmic losses in the form of heat, e.g. in a resistor or in the collector-emitter region of a pass transistor in its active mode. Hence, its maximum power efficiency is voltage-out/voltage-in dependent since the voltage difference is wasted.

In contrast, an SMPS regulates either output voltage or current by switching ideal storage elements, like inductors or capacitors. The switching elements (e.g., a MOSFET transistor operated in blocked or saturated state) has a very low saturation voltage and a low resistance when closed, and carry no current when open, and so the converters can theoretically operate with 100% efficiency (i.e., all input power is delivered to the load; no power is wasted as dissipated heat).

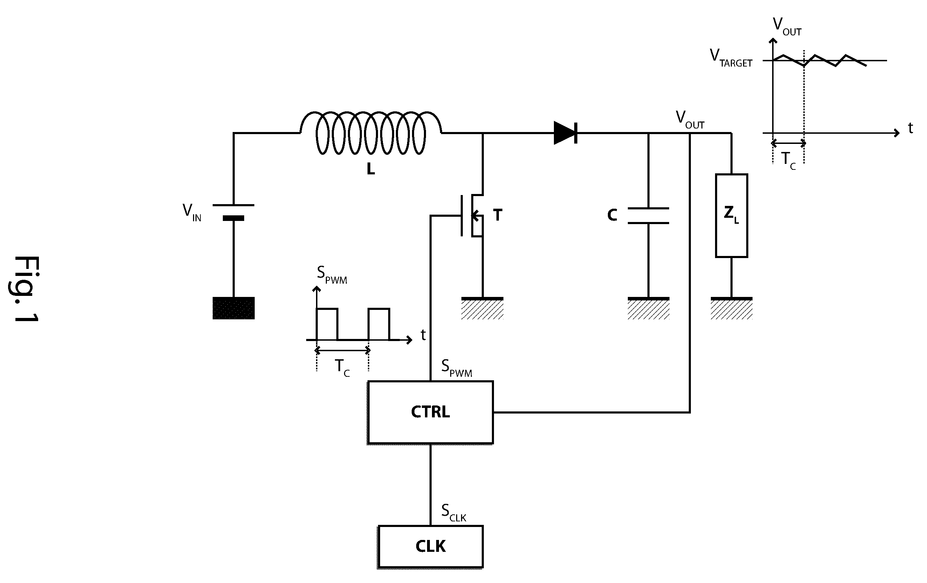

Typically, an SMPS includes a MOSFET switch T, a diode D, an output capacitor C and an inductor L coupled as per fig. 1. The SMPS is fed with an input voltage source $V_{IN}$ and produces a regulated voltage $V_{OUT}$ for feeding a load $Z_L$. This SMPS topology is referred to as Step-Up (or Boost). Other SMPS topologies can alternatively be used, such as step-down (or Buck), or step-up/down (or buck/boost).

The MOSFET T, which is the actively controlled component in the circuit, is interfaced to a controller CTRL. The controller CTRL applies a Pulse-Width Modulated (PWM) square-wave signal $S_{PWM}$ to the MOSFET's gate, thereby switching the device ON and OFF (see $S_{PWM}$ plot versus time in fig. 1). To maintain a constant output voltage, the controller senses the SMPS output voltage $V_{OUT}$ and varies the duty cycle D of the PWM signal $S_{PWM}$, dictating how long the MOSFET is ON during each switching period. The value of D, which is the ratio of the square wave's ON time to the switching period Tc, directly affects the voltage $V_{OUT}$ observed at the SMPS output.

The ON and OFF states of the MOSFET T divide the SMPS circuit into two phases: a charging phase and a discharging phase. Energy stored in the inductor L during the charging phase is transferred to the output load $Z_L$ and capacitor C during the discharging phase. The capacitor C supports the load and sustains the output voltage $V_{OUT}$ while the inductor L is charging. This cyclical transfer of energy between the circuit elements maintains the output voltage $V_{OUT}$ at the proper value $V_{TARGET}$, in accordance with the SMPS topology. The inductor L is central to the energy transfer from the source to the load during each switching cycle. It can be advantageously replaced by a transformer so as to DC-isolate the input power source $V_{IN}$ from the load $Z_L$.

The energy E stored in an inductor L is dependent upon its current $I_L$:

$$E = \frac{1}{2} L\, I_L^{\,2} \quad (1)$$

Therefore, the energy change in the inductor is gauged by the change in its current $\Delta I_L$, which is due to the voltage $V_L$ applied across the inductor L over a specific time period $\Delta T$:

$$\Delta I_L = \frac{V_L \Delta T}{L} \quad (2)$$

During the charging phase, the MOSFET T is switched ON and the inductor L is connected to the input voltage source $V_{IN}$. As a constant voltage is applied across the inductor L, the inductor's current $I_L$ follows a linear ramp with positive slope $V_{IN}/L$ as per equation (2). The diode D is reverse-biased and thus isolates the output capacitor C from the inductor L and the input voltage source $V_{IN}$. The output capacitor C supports the load $Z_L$ while energy builds up in the inductor L as per equation (1).

During the discharging phase, the MOSFET T is switched OFF, thereby disrupting the increasing current $I_L$ and creating an electro-magnetic force (emf) that tends to sustain the inductor's current. This emf adds as an additional voltage to the voltage source $V_{IN}$, and forward-bias the diode D so as the inductor's current can now recharge the output capacitor C and sustain the current drain from the load $Z_L$. During the discharging phase, the voltage $V_{IN}$-$V_{OUT}$-$V_{BIAS}$ is applied across the inductor L, $V_{BIAS}$ denoting the forward-bias voltage of the diode D, and the inductor's current $I_L$ follows a linear ramp with negative slope $(V_{IN}$-$V_{OUT}$-$V_{BIAS})/L$ as per equation (2).

The frequency $f_C = 1/T_C$ of the PWM signal that controls the operation of the SMPS shall be high enough so as smaller size and lighter weight coils can advantageously be used, and low enough so as switching losses remain small. Typically, $f_C$ is about a few hundreds kHz.

Some ripples with period $T_C$ will thus superimpose over the almost desired output voltage $V_{TARGET}$ on account of the recharging/discharging cycles (see $V_{OUT}$

plot versus time in fig. 1). When an SMPS is used to feed a transmission arrangement, the ripples on the power supply voltage may cause some unwanted signal distortion on account of interalia the finite Power Supply Rejection ratio (PSRR) of the transmit or receive amplifier.

In order to mitigate the SMPS noise for DMT transceivers, the PWM signal is typically locked on a frequency that is a multiple of the tone spacing, e.g. 4,3125kHZ or 8,625kHz for DSL transmissions. In this way, the FFT window length has an integer number of PWM cycles, meaning that distortion only happens at bins with a frequency that is a multiple of the frequency $f_C$, and has zero crossing at all other bins. Also the affected tones don't change. If a free-running clock was used instead, then various tones would get affected on account of the load or temperature fluctuations. This may ultimately leads to bit errors as the bit swap and Seamless Rate Adaptation (SRA) mechanisms are not fast enough to track these noise variations and the error correction mechanisms may have insufficient capability.

**Summary of the Invention**

It is an object of the present invention to further mitigate the interference caused by an SMPS in a transmission arrangement configured to transmit and/or receive cyclically extended data symbols.

In accordance with a first aspect of the invention, a transmission arrangement comprises a switched-mode power supply controlled by a PWM signal comprising successive cycles, a transceiver for transmitting or receiving successive cyclically-extended data symbols with a common symbol period $T_{DMT}$, the cyclically-extended data symbols respectively including a data part with a common data period $T_{DATA}$ and a cyclic extension of the data part, and a coupling path between the switched-mode power supply and the transceiver. The PWM signal is configured such that successive periods of the PWM signal comprising an integer number P of cycles respectively span an integer number M of symbol periods $T_{DMT}$.

In one embodiment of the invention, the successively transmitted or received cyclically-extended data symbols are grouped into time frames spanning an integer number L of symbol periods $T_{DMT}$, and M is equal to L.

In one embodiment of the invention, M is equal to 1.

In one embodiment of the invention, the PWM signal is further configured such that further successive periods of the PWM signal comprising an integer number K of cycles respectively span one data period $T_{DATA}$.

For DSL transceivers, $f_{DMT} = 1/T_{DMT}$ is equal to 4 kHz or 8 kHz, and $\Delta f = 1/T_{DATA}$ is equal to 4,3125 kHz or 8,625 kHz respectively. If so, P = m·69 and K = m·64, m being a non-null positive integer number, meaning that $f_C = 1/T_C$ is equal to 276 kHz and 552 kHz respectively, or a multiple thereof.

In one embodiment of the invention, the coupling path is a power supply path whereby the switched-mode power supply supplies power to an analog circuit of the transceiver, such as a transmit or receive amplifier.

In one embodiment of the invention, the coupling path is a parasitic coupling path whereby the switched-mode power supply generates electromagnetic interference that affect the operation of the transceiver.

Such a transmission arrangement may form part of an access node that supports wired communication with subscriber devices over an access plant, such as a Digital Subscriber Line Access Multiplexer (DSLAM), an Ethernet switch, an edge router, etc, and deployed at a Central Office (CO) or as a fiber-fed remote unit closer to subscriber premises (street cabinet, pole cabinet, building cabinet, etc).

Such a transmission arrangement may alternatively form part of a subscriber device, such as a Digital Subscriber Line (DSL) gateway, a subscriber terminal, etc.

The idea is to lock the frequency of the PWM signal that is used to control the SMPS to a multiple of the symbol rate so as to make the converter noise stationary. This stationary noise can be considered as an offset signal that can be easily subtracted in the frequency or time domain at the transmit or receive side. For instance, in addition to rotating and scaling the incoming tones, the frequency equalizer could also center the receive constellation points on a square grid so as to remove (or at least mitigate) this stationary offset.

The frequency of the PWM signal may further be locked to a multiple of the carrier spacing clock $\Delta f = 1/T_{DATA}$ so as to affect a reduced number of carriers as aforementioned. In this case, the PWM signal has a frequency that is a common multiple of both the symbol rate and the carrier spacing, for instance the Least Common Multiplier (LCM) of these both values, provided such a common multiple value is within the operational frequency range dictated by the SMPS design and components.

Also, the symbols may be grouped into time frames comprising an integer number of DMT symbols. If so, we may alternatively lock the PWM signal to a multiple of the frame rate. In this case, a more complex algorithm is required to predict the shape of the converter noise in each DMT symbol depending on the relative position of the DMT symbol in the frame.

**Brief Description of the Drawings**

The above and other objects and features of the invention will become more apparent and the invention itself will be best understood by referring to the following description of an embodiment taken in conjunction with the accompanying drawings wherein:

- fig. 1 represents a prior art SMPS whose operation has been previously described;
- fig. 2 represents a transmission arrangement as per the present invention; and

- fig. 3 represents cyclic extension of DMT symbols and respective timing information.

## Detailed Description of the Invention

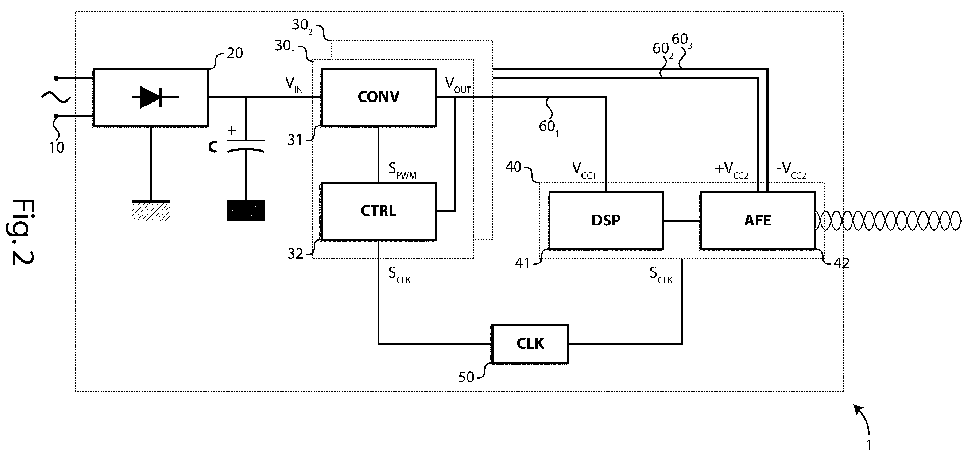

There is seen in fig. 2 a transmission arrangement 1 comprising:

- input terminals 10 to be coupled to an AC voltage source;
- a rectifier 20 for rectifying the AC input signal, coupled to a capacitor C for smoothing the rectified signal into an almost constant voltage value $V_{IN}$;
- one or more SMPSs 30 for converting the input voltage value $V_{IN}$ into respective voltages values $V_{OUT}$ as dictated by the power supply requirements of the respective hardware components of the transmission arrangement 1;
- one or more transceivers 40 respectively comprising a Digital Signal Processor (DSP) 41 and an Analog Front End (AFE) 42; and
- a clock generation unit 50.

The DSP 41 is configured to operate downstream and upstream communication channels for conveying user traffic over a transmission medium. The transmission medium can be of any type, including one or more Unshielded Twisted Pairs (UTP), a co-axial cable, a power line, etc.

The DSP 41 is further configured to operate downstream and upstream control channels that are used to transport control traffic between transceivers, such as diagnosis, management or control commands and responses. Control traffic is multiplexed with user traffic over the transmission medium.

More specifically, the DSP 41 is for encoding and modulating user and control data into digital DMT symbols, and for de-modulating and decoding user and control data from digital DMT symbols.

The following transmit steps are typically performed within the DSP 41:

- data encoding, such as data multiplexing, framing, scrambling, error control encoding, and data interleaving;
- signal modulation, comprising the steps of ordering the carriers according to a carrier ordering table, parsing the encoded bit stream according to the respective bit loadings of the ordered carriers, and mapping each chunk of bits onto an appropriate transmit constellation point (with respective carrier amplitude and phase), possibly using Trellis Coded Modulation (TCM);
- signal scaling;
- Inverse Fast Fourier Transform (IFFT);
- Cyclic Extension (CE) insertion; and possibly
- time-windowing.

The following receive steps are typically performed within the DSP 41:

- CE removal, and possibly time-windowing;
- Fast Fourier Transform (FFT);
- frequency equalization;
- signal de-modulation and detection, comprising the steps of applying to each and every equalized frequency sample an appropriate constellation grid, the pattern of which depends on the respective carrier bit loading, detecting the expected transmit constellation point and the corresponding transmit bit sequence, possibly with TCM decoding, and re-ordering all the detected chunks of bits according to the carrier ordering table; and
- data decoding, such as data de-interleaving, error detection and/or correction, de-scrambling, frame delineation and demultiplexing.

The AFE 42 comprises a Digital-to-Analog Converter (DAC) and an Analog-to-Digital Converter (ADC), a transmit filter and a receive filter for confining the signal energy within the appropriate communication frequency bands while rejecting out-of-band interference, a line driver for amplifying the transmit signal and for driving the transmission medium, and a Low Noise Amplifier (LNA) for amplifying the receive signal with as little noise as possible.

In case of Frequency Division Duplexing (FDD) operation where downstream and upstream communications operate simultaneously over the same transmission medium in distinct and non-overlapping frequency bands, the AFE 42 further comprises a hybrid for coupling the transmitter output to the transmission medium and the transmission medium to the receiver input while achieving low transmitter-receiver coupling ratio.

In case of Time Duplexing Division (TDD) operation where downstream and upstream communications operate over the same frequency band but in distinct and non-overlapping time slots, the hybrid can be advantageously omitted as the transmitter and receiver operate in alternate mode: the receive circuitry is switched OFF (or the receive signal is discarded) while the transmit circuitry is active, and the way around, the transmit circuitry is switched OFF while the receive circuitry is active.

The AFE 42 further comprises impedance-matching circuitry for adapting to the characteristic impedance of the transmission medium, clipping circuitry for clipping any voltage or current surge occurring over the transmission medium, and isolation circuitry (typically a transformer) for DC-isolating the transceiver from the transmission medium.

The clock generation unit (CLK) 50 supplies a reference clock signal $S_{CLK}$ with stable frequency $f_{CLK} = 1/T_{CLK}$ to the SMPSs 30 and to the transceivers 40. The SMPSs 30 use the clock signal $S_{CLK}$ to generate the PWM control signals that will regulate their respective output voltage. The transceivers 40 use the clock signal

$S_{LCK}$ to generate the necessary timing signals for DMT communication, including the sampling frequency clock and the carrier spacing clock.

The reference clock signal $S_{CLK}$ is typically derived from a communication link with a higher precedence within a clock distribution network. Alternatively, the reference clock signal $S_{CLK}$ can be derived from a Global Positioning Signal (GPS) signal, or from a timing protocol such as Precision time Protocol (PTP or IEEE 1588) or Network Time protocol (NTP).

Alternatively, the timing operation of the transceivers 40 may be locked to a free-running clock, which is then passed to the clock generation unit 50 for further distribution to the SMPSs 30. What does matter here is that the SMPSs 30 and the transceivers 40 are frequency-locked to each other, either through a common clock or by one supplying its clock signal to the other(s).

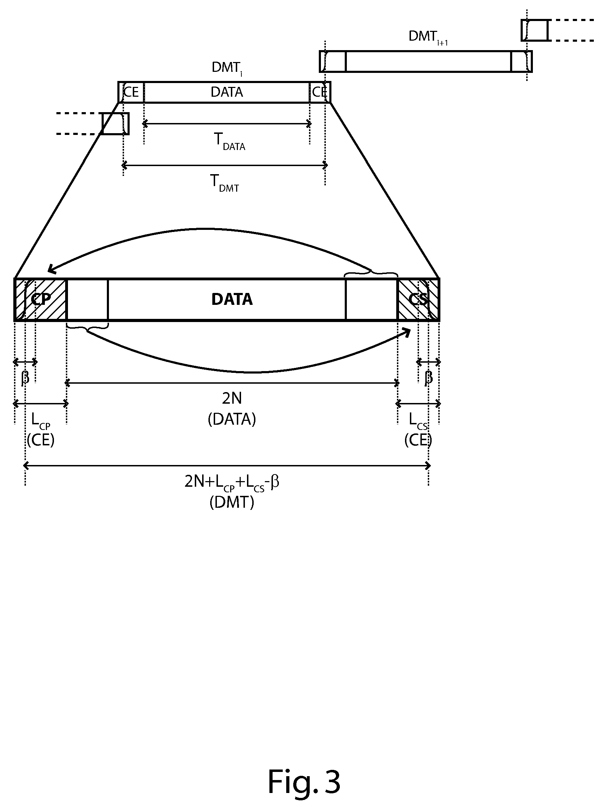

There is plotted in fig. 3 successively transmitted DMT symbols $DMT_i$, $DMT_{i+1}$, etc, wherein i denotes a DMT symbol index.

In order to mitigate the effects of Inter-Symbol Interference (ISI), the DMT symbols are cyclically extended. The length of the CE shall be greater than the length of the channel impulse response. If so, the channel equalization reduces to single-tap frequency equalization.

Let $\Delta f$ denote the carrier spacing used for DMT transmission, and let N denote the maximum supported carrier index. That is to say, the Nyquist frequency is equal to $f_M = N \cdot \Delta f$, and the signal sampling rate is equal to $fs = 2N \cdot \Delta f$.

A given transmit DMT symbol $DMT_i$ is constructed from the initial 2N time samples $\{x_n\}_{n=0..2N-1}$ as output by the IFFT block for that given symbol using the following rules.

The last $L_{CP}$ samples $\{x_n\}_{n=2N-LCP..2N-1}$ of the 2N initial IFFT samples are prepended to the IFFT samples as the Cyclic Prefix (CP).

The first $L_{CS}$ samples $\{x_n\}_{n=0..LCS-1}$ of the 2N initial IFFT samples are appended to the block of 2N + $L_{CP}$ samples as the cyclic suffix (CS).

The first $\beta$ samples of the CP and the last $\beta$ samples of the CS are used for shaping the envelope of the transmitted signal and reduce spectral leakage during symbol transitions (windowing). The windowed parts (i.e, $\beta$ samples) of consecutive symbols shall overlap and be added to one another. Windowing may be optional.

The CE length is defined as $L_{CE} = L_{CP} + L_{CS} - \beta$; and the CE period is equal to $T_{CE} = (L_{CP} + Lcs - \beta)/2N \cdot \Delta f$.

For a given setting of the CE length and window length, the DMT symbols will be transmitted at a rate equal to $f_{DMT} = 1/T_{DMT} = 2N \cdot \Delta f/(2N + L_{CP} + Lcs - \beta)$, $T_{DMT}$ denoting the DMT symbol period.

The duration of the DATA portion of the DMT symbol is equal to $T_{DATA} = 2N/2N \cdot \Delta f = 1/\Delta f$, and we have $T_{DMT} = T_{DATA} + T_{CE}$.

As an exemplary embodiment, two SMPSs 30 and one transceiver 40 have been plotted in fig. 2 as forming part of the transmission arrangement 1. A first SMPS $30_1$ supplies a positive supply voltage value $V_{CC1}$ for feeding the DSP 41 via a power supply path $60_1$; and a second SMPS $30_2$ supplies opposite supply voltage values $\pm V_{CC2}$ for feeding the AFE 42 via two respective power supply paths $60_2$ and $60_3$.

There is seen in fig. 2 further details about the SMPSs 30.

The SMPSs 30 individually comprise:

- a voltage converter (CONV) 31, which can be of any type such as the aforementioned step-up converter depicted in fig. 1; and
- a controller (CTRL) 32 for regulating the output voltage to a constant value $V_{TARGET}$ by controlling the switching element of the voltage converter 31 by means of a PWM signal $S_{PWM}$ with frequency $f_C = 1/T_C$ and varied duty cycle D.

The controller 32 is further coupled to the clock generation unit 50. The PWM signal $S_{PWM}$ is frequency-locked on the clock signal $S_{CLK}$. The controller 32 typically includes a divider block to divide the clock signal frequency $F_{CLK}$ down to a frequency $f_C$ situated in an appropriate frequency range for operating the voltage converter 31, and that will be used for generating the PWM signal $S_{PWM}$. This divider block can be moved within the clock generation unit 50.

The controller 32 adjusts the duty cycle D of the PWM signal by sensing the voltage value observed at the output of the SMPS 30. If the output voltage value is too low, then the duty cycle D is increased so as to allow more energy to be stored in the storage element of the voltage converter 31 and released into the load. The way around, if the output voltage value is too high, then the duty cycle D is decreased.

The operations of the SMPSs 30 cause some unwanted distortions in the transmit and/or receive path of the transceiver 40. These distortions mostly consists of small ripples with frequency $f_C$ that superimpose over the transmit or receive signal, e.g. on account of the PSRR of the line driver or LNA of the AFE 42.

In a preferred embodiment of the present invention, the frequency $f_C$ of the PWM signal $S_{PWM}$ is configured to be equal to a common multiple of both the DMT symbol rate $F_{DMT}$ and the carrier spacing $\Delta f$, or equivalently the symbol period $T_{DMT}$ and the data period $T_{DATA}$ spans an integer number of PWM cycles $T_C$.

For instance, if DSL transmission with carrier spacing $\Delta f = 4,3125$ kHz and DMT symbol rate $f_{DMT} = 4$ kHz is considered, then the frequency of the PWM signal should ideally be configured to be $f_C = 276$ kHz $= 69 \cdot 4 = 64 \cdot 4,3125$, or a multiple thereof (e.g., 552 kHz or 1104 kHz).

If DSL transmission with carrier spacing $\Delta f = 8,625$ kHz and DMT symbol rate $f_{DMT} = 8$ kHz is considered, then the frequency of the PWM signal should ideally be configured to be $f_C = 552$ kHz $= 69 \cdot 8 = 64 \cdot 8,625$, or

a multiple thereof (e.g., 1104 kHz).

If that frequency cannot be directly derived from the clock frequency $F_{CLK}$, then the controller 32 may switch between different frequency values during successive cycles of the PWM signal $S_{PWM}$ so as to approximate the desired value. If such a choice is made, the symbol period $T_{DMT}$ and the data period $T_{DATA}$ would still spans an integer number of PWM cycles (with respective durations).

Owing to that particular choice of the PWM signal frequency $f_C$, the noise signal generated by the SMPSs 30 that superimposes on the useful transmit or receive signal becomes stationary, and thus can be easily compensated at the transmit or receive side.

For instance, the receiver can subtract an estimate of this noise signal with almost stationary phase and amplitude, which corresponds to a linear translation of the constellation grid that is used for demodulating the receive frequency samples. This constellation shift is expected to be frequency dependent, and can take place before or after frequency equalization depending on whether the SMPS noise is predominant at transmit or receive side.

Also, assuming the PWM signal is almost periodic (this assumption is expected to be valid over the course of a few DMT symbols at least), then only carriers whose index is a multiple of PWM signal frequency $f_C$ are impacted. For instance, if DSL transmission with carrier spacing $\Delta f = 4,3125$ kHz and DMT symbol rate $f_{DMT} = 4$ kHz is considered, only one carrier out of 64 is impacted.

In an alternative embodiment, the frequency $f_C$ of the PWM signal $S_{PWM}$ is configured to be a multiple of the DMT symbol rate $f_{DMT}$ only, or equivalently the symbol period $T_{DMT}$ spans an integer number of PWM cycles $T_C$. This would be the case if for instance the common multiple value is outside the operational frequency range of the SMPSs 30.

Now, we may expect a major part of the carriers to be impacted, yet the noise caused by the SMPSs 30 is still expected to be stationary, and thus can be easily mitigated as aforementioned.

For example, for next generation copper access with carrier spacing $\Delta f = 51,750$ kHz and DMT symbol rate $f_{DMT} = 48$ kHz, the LCM of the carrier spacing and symbol rate yields $f_C = 3,312$ MHz, which is not a workable frequency for an SMPS. Instead, the PWM signal is preferably locked on a multiple of the DMT symbol rate only. For instance, one could use $f_C = m.51,75$ kHz with $m = 3$ to 6.

In still an alternative embodiment, the DMT symbols are grouped into TDD frames. One TDD frame spans an integer number M of DMT symbols (including any necessary guard periods for transitioning between transmit and receive operation). The frame period is thus equal to $T_{FRAME} = 1/f_{FRAME} = M.T_{DMT}$.

In this embodiment, the frequency $f_C$ of the PWM signal $S_{PWM}$ can be configured to be a multiple of the frame rate $f_{FRAME}$, or equivalently the frame periods $T_{FRAME}$ spans an integer number of PWM cycles $T_C$.

If so, the noise induced by the SMPS 30 is no longer stationary for the successive DMT symbols, yet remains stationary if only symbols with a given relative position within the TDD frame are considered. This implies that the applied constellation shift further depends on the relative position within the TDD frame of the DMT symbol that is considered.

It is to be noticed that the SMPSs $30_1$ and $30_2$ do not necessarily use the same frequency $f_C$. For instance, the SMPS $30_2$ may use a frequency $f_{C2}$ that is a multiple of the symbol rate (and possibly of the carrier spacing too) as it supplies power to the analog part of the transceiver 40 and thus has a predominant impact in terms of signal distortion, while the SMPS $30_1$ would keep on using a free-running clock $f_{C1}$ as it supplies power to the digital part of the transceiver 40 and thus has a much lower impact.

It is to be further noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

**Claims**

1. **A transmission arrangement** (1) comprising:

    - **a switched-mode power supply** (30) controlled by **a Pulse-wide Modulated PWM signal** ($S_{PWM}$) comprising **successive cycles,**
    - **a transceiver** (40) for transmitting or receiving **successive cyclically-extended data symbols** (DMTi; DMTi+1) with **a common symbol period $T_{DMT}$,** the cyclically-extended data symbols respectively including **a data part** (DATA) with **a common data period $T_{DATA}$** and **a cyclic extension** (CE) of the data part,
    - **a coupling path** (60) between the switched-mode power supply and the transceiver,

    *wherein* the PWM signal is configured such that **successive periods** of the PWM signal comprising **an integer number P** of cycles respectively span **an integer number M** of symbol periods $T_{DMT}$.

2. **A transmission arrangement** (1) according to claim 1, *wherein* the successively transmitted or received cyclically-extended data symbols are grouped into **time frames** spanning **an integer number L** of symbol periods $T_{DMT}$, *and wherein* M is equal to L.

3. **A transmission arrangement** (1) according to claim 1, *wherein* M is equal to 1.

4. **A transmission arrangement** (1) according to claim 3, *wherein* the PWM signal is further configured such that **further successive periods** of the PWM signal comprising **an integer number K** of cycles respectively span one data period $T_{DATA}$.

5. **A transmission arrangement** (1) according to claim 4, *wherein* the transceiver is **a Digital Subscriber Line DSL transceiver,** *wherein* $1/T_{DMT}$ = 4 kHz and $1/T_{DATA}$ = 4,3125 kHz, *and wherein* P = m·69 and K = m·64, m being a non-null positive integer.

6. **A transmission arrangement** (1) according to claim 4, *wherein* the transceiver is **a Digital Subscriber Line DSL transceiver,** *wherein* $1/T_{DMT}$ = 8 kHz and $1/T_{DATA}$ = 8,625 kHz, *and wherein* P = m·69 and K = m·64, m being a non-null positive integer number.

7. **A transmission arrangement** (1) according to any of claims 1 to 6, *wherein* the coupling path is **a power supply path** ($60_2$; $60_3$) whereby the switched-mode power supply supplies power to **an analog circuit** (42) of the transceiver.

8. **A transmission arrangement** (1) according to claim 7, *wherein* the analog circuit is **a receive amplifier** or **a transmit amplifier.**

9. **A transmission arrangement** (1) according to any of claims 1 to 6, *wherein* the coupling path is **a parasitic coupling path** whereby the switched-mode power supply generates electromagnetic interference that affect the operation of the transceiver.

10. **An access node** comprising **a transmission arrangement** (1) according to any of claims 1 to 9.

11. **An access node** according to claim 10, *wherein* the access node is **a Digital Subscriber Line Access Multiplexer DSLAM.**

12. **A subscriber device** comprising **a transmission arrangement** (1) according to any of claims 1 to 9.

13. **A subscriber device** according to claim 12, wherein the subscriber device is **a Digital Subscriber Line DSL gateway.**

**Patentansprüche**

1. **Übertragungsanordnung** (1), umfassend:

    - **ein Schaltnetzteil** (30), das durch **ein pulsweitenmoduliertes PWM Signal** ($S_{PWM}$) gesteuert wird, das **aufeinanderfolgende Zyklen** umfasst,
    - **einen Transceiver** (40) zum Senden oder Empfangen von **aufeinanderfolgenden zyklisch erweiterten Datensymbolen** ($DMT_i$; $DMT_{i+1}$) mit **einer gemeinsamen Symbolperiode $T_{DMT}$,** wobei die zyklisch erweiterten Datensymbole jeweils **einen Datenteil** (DATA) mit **einer gemeinsamen Datenperiode $T_{DATA}$** und **eine zyklische Erweiterung** (CE) des Datenteils umfassen,
    - **einen Kopplungspfad** (60) zwischen dem Schaltnetzteil und dem Transceiver,

    *wobei* das PWM Signal so ausgelegt ist, dass **aufeinanderfolgende Perioden** des PWM Signals, umfassend **eine ganzzahlige Anzahl P** von Zyklen, jeweils **eine ganzzahlige Anzahl M** von Symbolperioden $T_{DMT}$ überspannen.

2. **Übertragungsanordnung** (1) nach Anspruch 1, *wobei* die aufeinanderfolgend gesendeten oder empfangenen zyklisch erweiterten Datensymbole in **Zeitrahmen** gruppiert werden, die **eine ganzzahlige Anzahl L** von Symbolperioden $T_{DMT}$ überspannen, *und wobei* M gleich L ist.

3. **Übertragungsanordnung** (1) nach Anspruch 1, *wobei* M gleich 1 ist.

4. **Übertragungsanordnung** (1) nach Anspruch 3, *wobei* das PWM Signal weiterhin so ausgelegt ist, dass **weitere aufeinanderfolgende Perioden** des PWM Signals, umfassend **eine ganzzahlige Anzahl K** von Zyklen, jeweils eine Datenperiode $T_{DATA}$ überspannen.

5. **Übertragungsanordnung** (1) nach Anspruch 4, *wobei* der Transceiver **ein digitaler Teilnehmeranschluss-DSL-Transceiver** ist,

   *wobei* $1/T_{DMT}$ = 4 kHz und $1/T_{DATA}$ = 4,3125 kHz,
   *und wobei* P = m·69 und K = m·64, wobei m eine positive, ganze Nicht-null-Zahl ist.

6. **Übertragungsanordnung** (1) nach Anspruch 4, *wobei* der Transceiver **ein digitaler Teilnehmeranschluss-DSL-Transceiver** ist,

   *wobei* $1/T_{DMT}$ = 8 kHz und $1/T_{DATA}$ = 8,625 kHz,
   *und wobei* P = m·69 und K = m·64, wobei m eine positive, ganze Nicht-null-Zahl ist.

7. **Übertragungsanordnung** (1) nach einem beliebigen der Ansprüche 1 bis 6, *wobei* der Kopplungspfad **ein Stromversorgungspfad** ($60_2$; $60_3$) ist, wobei das Schaltnetzteil **einen analogen Schaltkreis** (42) des Transceivers mit Strom versorgt.

8. **Übertragungsanordnung** (1) nach Anspruch 7, *wobei* der analoge Schaltkreis **ein Empfangsverstärker** oder **ein Sendeverstärker** ist.

9. **Übertragungsanordnung** (1) nach einem beliebigen der Ansprüche 1 bis 6, *wobei* der Kopplungspfad **ein Störkopplungspfad** ist, wobei das Schaltnetzteil elektromagnetische Störungen erzeugt, die den Betrieb des Transceivers beeinträchtigen.

10. **Zugangsknoten,** umfassend **eine Übertragungsanordnung** (1) nach einem beliebigen der Ansprüche 1 bis 9.

11. **Zugangsknoten** nach Anspruch 10, *wobei* der Zugangsknoten **ein digitaler Teilnehmeranschluss-Zugangsmultiplexer DSLAM** ist.

12. **Teilnehmervorrichtung,** umfassend **eine Übertragungsanordnung** (1) nach einem beliebigen der Ansprüche 1 bis 9.

13. **Teilnehmervorrichtung** nach Anspruch 12, wobei die Teilnehmervorrichtung **ein digitales Teilnehmeranschluss-DSL-Gateway** ist.

## Revendications

1. **Agencement de transmission** (1), comprenant :

   - **une alimentation en mode commuté** (30) commandée par **un signal à modulation de largeur d'impulsion PWM** ($S_{PWM}$) comprenant **des cycles successifs,**
   - un **émetteur-récepteur** (40) pour transmettre ou recevoir des **symboles de données à extension cyclique successifs** ($DMT_i$ ; $DMT_{i+1}$) avec **une période de symbole commune $T_{DMT}$,** les symboles de données à extension cyclique comprenant respectivement **une partie de données** (DATA) avec **une période de données commune $T_{DATA}$** et **une extension cyclique** (CE) de la partie de données,
   - **un chemin de couplage** (60) entre l'alimentation en mode commuté et l'émetteur-récepteur,

   *dans lequel* le signal PWM est configuré de sorte que des **périodes successives** du signal PWM comprenant **un nombre entier P** de cycles englobent respectivement **un nombre entier M** de périodes de symbole $T_{DMT}$.

2. **Agencement de transmission** (1) selon la revendication 1, *dans lequel* les symboles de données à extension cyclique transmis ou reçus successivement sont regroupés en **blocs temporels** englobant **un nombre entier L** de périodes de symbole $T_{DMT}$, *et dans lequel* M est égal à L.

3. **Agencement de transmission** (1) selon la revendication 1, *dans lequel* M est égal à 1.

4. **Agencement de transmission** (1) selon la revendication 3, *dans lequel* le signal PWM est en outre configuré afin que **d'autres périodes successives** du signal PWM comprenant **un nombre entier K** de cycles englobent respectivement une période de données $T_{DATA}$.

5. **Agencement de transmission** (1) selon la revendication 4, *dans lequel* l'émetteur-récepteur est un **émetteur-récepteur de ligne d'abonné numérique DSL,**

> *dans lequel* $1/T_{DMT}$ = 4 kHz et $1/T_{DATA}$ = 4,3125 kHz,
> *et dans lequel* P = m.69 et K = m.64, m étant un nombre entier positif non nul.

6. **Agencement de transmission** (1) selon la revendication 4, *dans lequel* l'émetteur-récepteur est **un émetteur-récepteur de ligne d'abonné numérique DSL,**

> *dans lequel* $1/T_{DMT}$ = 8 kHz et $1/T_{DATA}$ = 8,625 kHz,
> *et dans lequel* P = m.69 et K = m.64, m étant un nombre entier positif non nul.

7. **Agencement de transmission** (1) selon l'une quelconque des revendications 1 à 6, *dans lequel* le chemin de couplage est **un chemin d'alimentation** ($60_2$ ; $60_3$) au moyen duquel l'alimentation en mode commuté alimente **un circuit analogique** (42) de l'émetteur-récepteur.

8. **Agencement de transmission** (1) selon la revendication 7, *dans lequel* le circuit analogique est **un amplificateur de réception** ou **un amplificateur d'émission.**

9. **Agencement de transmission** (1) selon l'une quelconque des revendications 1 à 6, *dans lequel* le chemin de couplage est **un chemin de couplage parasite** au moyen duquel l'alimentation en mode commuté génère des interférences électromagnétiques qui affectent le fonctionnement de l'émetteur-récepteur.

10. **Noeud d'accès** comprenant **un agencement de transmission** (1) selon l'une quelconque des revendications 1 à 9.

11. **Noeud d'accès** selon la revendication 10, le noeud d'accès étant un **multiplexeur d'accès de ligne d'abonné numérique DSLAM.**

12. **Dispositif d'abonné** comprenant **un agencement de transmission** (1) selon l'une quelconque des revendications 1 à 9.

13. **Dispositif d'abonné** selon la revendication 12, dans lequel le dispositif d'abonné est **une passerelle de ligne d'abonné numérique DSL.**

Fig. 1

Fig. 2

Fig. 3